# EUROPEAN PATENT APPLICATION

(11) **EP 2 525 300 A1**
(43) Date of publication of application: **21.11.2012**
(21) Application number: 11762663.0
(22) Date of filing: 24.03.2011
(51) Int. Cl.: G06F 21/20

(54) **FORENSIC SYSTEM, METHOD AND PROGRAM**

(30) Priority: 29.03.2010 JP 2010075961
(71) Applicant: Ubic, Inc., Minato-ku, Tokyo 108-0075 (JP)
(72) Inventor: MORIMOTO, Masahiro, Tokyo 108-0075 (JP); SHIRAI, Yoshikatsu, Tokyo 1080075 (JP); TAKEDA, Hideki, Tokyo 1080075 (JP)
(74) Representative: Klunker . Schmitt-Nilson . Hirsch
(86) International application number: PCT/JP2011/057142
(87) International publication number: WO 2011/122432

(57) **Abstract**

The present invention can extract only digital document information related with a specific individual to achieve reduction of working load for evidential material preparation for litigation.

Recorded digital information is displayed, user-specifying information is set for each of a plurality of document files, the user-specifying information showing which one of users contained in user information the document file is related with, a recording unit is set to record the set user-specifying information, at least one user is selected, a document file where user-specifying information which corresponds to the selected user was set is searched, additional information showing whether or not the searched document file is related with a litigation is set via a display unit, and a document file which is related with litigation is outputted based on the additional information.

## Description

### BACKGROUND OF INVENTION

### 1. Technical Field

The present invention relates to a forensic system, a forensic method, and a forensic program, and in particular to a forensic system, a forensic method, and a forensic program for collecting digital document information as related with litigation.

### 2. Background art

Conventionally, when a crime or a legal conflict relating to a computer such as unauthorized access or leakage of confidential information so-called "forensic" occurs, a means or a technique for collecting and analyzing devices, data, or electric records required for investigation into the cause or the investigation to clarify legal evidentiality thereof has been proposed.

Particularly, in a civil litigation in United State of America, since such a procedure as eDiscovery is required, both a plaintiff and a defendant of litigation must submit all of related digital information as evidences. They also need to submit digital information recorded in computers or server as evidences as well.

On the other hand, according to rapid development and spreading of IT, most information is produced by computers in a today's business world, so that much digital information floods even within the same company.

Therefore, in the preparation work of evidential material for submission to a law court, such a mistake that even confidential digital information which is not necessarily related with litigation is submitted as evidential materials occurs easily and it considers as a problem.

In recent years, techniques about a forensic system have been proposed in JP-A-2006-178521 and JP-A-2007-148731. JP-A-2006-178521 discloses a forensic system where identification of a wrongdoer can be performed efficiently by a method which allows testimony to evidentiality conservation whereby reliability of the identification is robust against human factors.

JP-A-2007-148731 discloses a forensic system where a forensic which performs an ex-post handling such as identification of a criminal and a legal action is a content of loss compensation in an information damage insurance system which pays an insurance coverage to damage due to leakage of personal information.

### Summary of Invention

However, the forensic systems of JP-A-2006-17852 and JP-A-2007-148731 eventually collect an enormous amount of digital document information relating to users who used a plurality of computers and a server.

Under such a situation that an operator cannot grasp which user utilized (produced, edited, or browsed) the digital document information accurately, determination about whether or not each of the collected digital document information is valid as an evidential material for litigation is problematic because of necessity of much labor and cost.

In view of these circumstances, an object of the present invention is to provide a forensic system, a forensic method, and a forensic program that can set which user digital document information is related with after the digital document information is collected.

In an aspect of the present invention, there is provided a forensic system which acquires digital information recorded on a plurality of computers or a server to analyze the acquired digital information, comprising: a digital information acquiring unit which acquires digital information containing digital document information composed of a plurality of document files, and user information about users using the plurality of computers or the server; a recording unit which records therein the digital information acquired by the digital information acquiring unit; a display unit which displays the recorded digital information; a user-specifying information setting unit which sets user-specifying information showing which one of users contained in the user information the document file each of the plurality of document files is related with and which sets the recording unit to record the set user-specifying information, via the display unit; a user-selecting unit which selects at least one user via the display unit; a searching unit which searches a document file to which user-specifying information corresponding to the selected user was set; an additional information setting unit which sets additional information showing whether or not the searched and extracted document file is related with litigation via the display unit; and an output unit which outputs a document file which is related with litigation, based on the additional information.

The "user-specifying information setting unit" is one which sets user-specifying information showing which one of users contained in the user information the document file each of the plurality of document files is related with to record the set user-specifying information in the recording unit via the display unit. The "user-specifying information setting unit" sets, for each document file, a user who utilized the document file.

Since a case where the user information recorded on a plurality of computers or a server cannot necessarily contain all users related with litigation occurs, the "user-specifying information setting unit" may set a new user additionally manually according to an operator's instruction. For example, the "user-specifying information setting unit" may be a unit for setting, to a document file, user-specifying information showing that pluralities of users are related with the document file. The "user-specifying information setting unit" may perform such setting that a single document file is related with a single user, or may perform such setting that a plurality of users utilizes a single document file. The "user-specifying information setting unit" may also be a unit which can set, to user information, that a plurality of users are related with a document file, and ranking information showing a relative rank of relationship of each of a plurality of users with litigation. While setting a plurality of users to a single document file, the "user-specifying information setting unit" can set the rank showing which one of the set users is highly related with litigation. The "user-specifying information setting unit" may also be a unit which selects a rank in the ranking information, and the searching unit may be a unit which searches a document file where user-specifying information corresponding to a user having the selected rank was set.

The term "digital information acquiring unit" means a unit which may acquire digital information recorded in a plurality of computers or a server. For example, a method for acquiring the digital information may include a method for copying digital information recorded in the computers or the server in an electronic medium to copy the digital information in a forensic system via the electronic medium, a method for connecting the computers or the server and the forensic system to each other via a network line to copy digital information recorded in the computers or the server in the forensic system, thereby performing preservation of digital information. Moreover, the digital information acquiring unit may include a unit to acquire second digital information containing second digital document information and second user information, the second digital information being recorded in a second server different from the server, and the forensic system may be a system which searches not only the digital document information but also a plurality of document files constituting the second digital document information.

The forensic system of the present invention, the forensic system further comprise a text information extracting unit that extracts text information for each of the plurality of document files from the recorded digital document information; and a keyword selecting unit which selects a keyword, wherein the searching unit searches a document file including the selected keyword, based on the extracted text information; and the additional information setting unit sets additional information to the searched document file.

In one aspect of the present invention, the forensic system further comprises a data converting unit that converts document files in the digital document information recorded in the recording unit into a predetermined data format, wherein the document files converted by the data converting unit are processed with the same data format as the converted data format in a period before they are outputted by the output unit.

In one aspect of the present invention, the forensic system further comprises a statistical data producing unit that produces statistical data represented from data size for each data format of the acquired digital document information or statistical data represented from data size for each data format of the searched digital document information.

In one aspect of the present invention, the forensic system further comprises a clock unit that, when digital information is anew acquired, clocks a date and time of the acquiring, the digital information further including folder information saving the digital document information, wherein the digital information acquiring unit acquires digital document information and folder information which were produced after a time and date clocked by the clock unit previously and acquires user information related with the acquired digital document information.

The term "server" may means one or more servers, or a combination of a plurality of servers, and the server may include at least two of a mail server, a file server, and a document managing server.

In one aspect of the present invention, the forensic system is provided with a plurality of additional information setting units where additional information can be set by different operators.

The term "display unit" means such a unit as a display device to display digital information. The term "displays the recorded digital information" may mean displaying all of the user information and the digital document information, displaying at least one of these information, or displaying at least one of attribute information (for example, names of users, file names of document files, document files) of these information

The term "output unit" means a unit to output digital document information as a production. For example, the output unit may be a printer or a device to produce a digital document file.

The term "user information" indicates information showing users recorded on a computer and/or a server. The user information may include a user ID showing who utilized the computer and/or the server, information showing a user who actually edited, produced, or browsed a document file, or access information showing when and which digital document information the user accessed.

In an another aspect of the present invention, there is provided a forensic method which acquires digital information recorded on a plurality of computers or a server to analyze the acquired digital information, comprising: a step of acquiring digital information containing digital document information composed of a plurality of document files, and user information about user utilizing the plurality of computers or the server; a step of recording the digital information acquired by the digital information acquiring unit; a step of displaying the recorded digital information; a step of setting user-specifying information showing which one of users contained in the user information the document file each of the plurality of document files is related with, and setting the recording unit to record the set user-specifying information; a step of selecting at least one user; a step of searching a document file where user-specifying information corresponding to the selected user was set; a step of setting additional information showing whether or not the searched document file is related with litigation; and a step of outputting a document file related with litigation based upon the additional information.

In one aspect of the present invention, there is provided a forensic program which acquires digital information recorded on a plurality of computers or a server to analyze the acquired digital information, the forensic program causing a computer to execute: a function of acquiring digital information containing digital document information composed of a plurality of document files, and user information about user utilizing the plurality of computers or the server; a function of recording digital information acquired by the digital information acquiring unit; a function of displaying the recorded digital information; a function of setting user-specifying information showing which one of users contained in the user information the document file each of the plurality of document files is related with, and setting the recording unit to record the set user-specifying information; a function of selecting at least one user; a function of searching a document file where user-specifying information corresponding to the selected user was set; a function of setting additional information showing whether or not the searched document file is related with litigation; and a function of outputting a document file related with litigation based upon the additional information.

The above-described summary of the present invention does not include all of features required for the present invention. Further, sub-combinations of these features may constitute the present invention.

According to the forensic system, the forensic method, and the forensic program of the present invention, by setting user-specifying information showing which one of users contained in user information the document file each of a plurality of document files is related with, setting the recording unit to record the set user-specifying information, selecting at least one user, searching a document file where user-specifying information corresponding to the selected user was set, setting additional information showing whether or not the searched document file is related with litigation via the display unit, and outputting a document file related with litigation based upon the additional information, the operators can extract, analyze, and evaluate only digital document information classified according to each user related with litigation, without evaluating all the acquired digital document information.

Thereby, the operators can extract only digital document information related with a specific individual from a flood of digital document information to achieve reduction of working load for evidential material preparation for litigation.

According to the forensic system, the forensic method, and the forensic program of the present invention, by setting user-specifying information showing that a document file is related with each of a plurality of user, the operators can set that a single document is related with a plurality of users.

According to the forensic system, the forensic method, and the forensic program of the present invention, when the relationship of the document file with each of a plurality of users and ranking information showing a relative rank order of relationship of each of the plurality of users with litigation are set to the user-specifying information, the relationship of a plurality of users with a document file and the rank order showing a relative degree of relationship with litigation of each user among the plurality of users can be set preliminarily.

According to the forensic system, the forensic method, and the forensic program of the present invention, when the searching unit searches a document file where user information corresponding to a user having the selected rank order was set, digital document information with which a user related with litigation is related can be searched based on the rank order of the relative degree of relationship.

According to the forensic system, the forensic method, and the forensic program of the present invention, in the case where second digital information containing second digital document information and second user information which are recorded on a second server different from the server is acquired, when not only the digital document information but also a plurality of document files constituting the second digital document information is searched, all the digital document information recorded on a plurality of servers can be analyzed and evaluated.

According to the forensic system, the forensic method, and the forensic program of the present invention, the text information extracting unit, the keyword selecting unit, and the searching unit are further provided, where, when the additional information setting unit sets additional information to the searched document file, the operators can narrow down only one of the digital document information recorded in the server which was accessed by the specific individual, and a population of digital document information which is potentially related with litigation by a predetermined search.

According to the forensic system, the forensic method, and the forensic program of the present invention, when a document file converted by the data converting unit is processed with the same data format as the converted data format in a period before it is outputted by the output unit, the operators can reduce a wasteful step such as data format conversion in the course of a processing flow and they can exclude a risk of quality degradation of the digital document information.

According to the forensic system, the forensic method, and the forensic program of the present invention, further, when the statistical data producing unit is provided, since statistical data can be visualized and provided to an operator, the forensic system, the forensic method, and the forensic program make it possible to grasp labor required for litigation preparation in an early stage.

According to the forensic system, the forensic method, and the forensic program of the present invention, further, the digital information acquiring unit can perform difference collection of digital information when acquiring digital document information and folder information which were produced after a time and date clocked by the clock unit previously, so that a load of acquiring the same digital information from a server redundantly each time can be reduced.

The forensic system, the forensic method, and the forensic program may further include a plurality of additional information setting units. The additional information setting units may set additional information by different operators so, a plurality of individuals enable to evaluate digital document information as a preparation work for submitting evidential material to a law court at early stage.

### Brief Description of the Drawings

FIG. 1 is a block diagram showing a forensic system in a first embodiment of the present invention;
FIG. 2 is a diagram showing a flow of a forensic system service of the present invention;
FIG. 3 is a flow chart showing a present forensic process of the forensic system of the present invention; and
FIG. 4 is a block diagram showing a forensic system in a second embodiment of the present invention.

### Description of the Preferred Embodiments

Embodiments of the present invention will be described below with reference to the drawings.

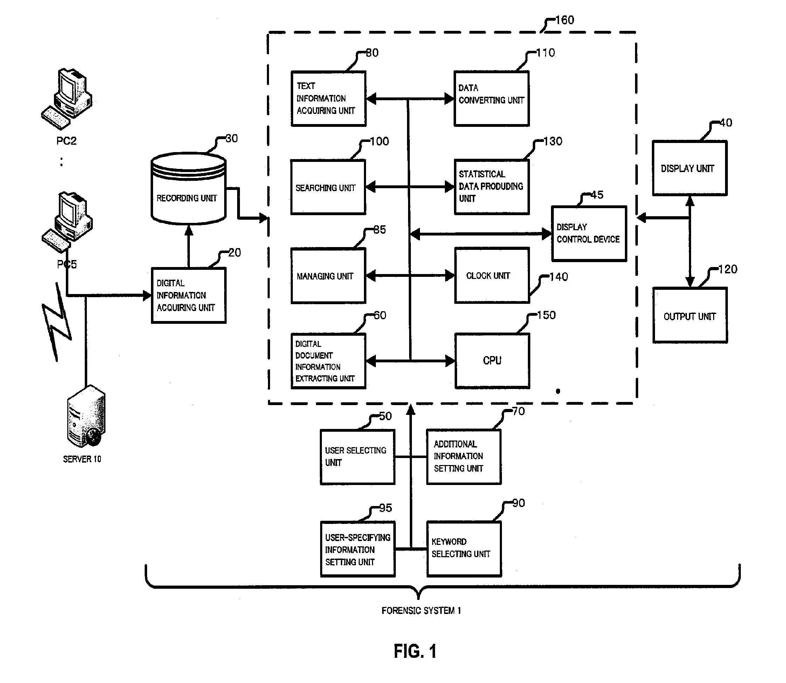

FIG. 1 is a block diagram showing a forensic system 1 in an embodiment of the present invention.

Forensic system 1 shown in FIG. 1 acquires digital information recorded on a plurality of computers (PC2 to PC5) and server 10 to analyze the acquired digital information. The forensic system is provided with digital information acquiring unit 20 which acquires digital information containing digital document information composed of a plurality of document files and user information about users using the plurality of computers (PC2 to PC5) or server 10; recording unit 30 which records digital information acquired by the digital information acquiring unit 20; display unit 40 which displays the recorded digital information; user specifying information setting unit 95 which sets user-specifying information showing which one of users contained in the user information the document file each of the plurality of document files is related with and which sets the recording unit to record the set user-specifying information, confirming (via) display unit 40; user-selecting unit 50 which selects at least one user via display unit 40; searching unit 100 which searches a document file to which user-specifying information corresponding to the selected user was set; additional information setting unit 70 which sets, via display unit 40, additional information showing whether or not the searched document file is each related with litigation; and output unit 120 which outputs a document file related with litigation based on the additional information.

Control unit 160 includes display control unit 45, digital document information extracting unit 60, text information acquiring unit 80, managing unit 85, searching unit 100, data converting unit 110, statistical data producing unit 130, clock unit 140, and CPU 150.

Further, forensic system 1 may include a keyboard, a mouse or data input device such as a touch panel if display unit 40 has a touch panel function. The data input device may include user-selecting unit 50, additional information setting unit 70, keyword selecting unit 90, and user-specifying information setting unit 95.

The user information shows users recorded on the computers and/or the server. The user information may include a user ID showing a user who utilized the computers or the server, information showing a user actually edited, produced, or browsed a document file, or access information showing when and which digital document information the user accessed.

User selecting unit 50, additional information setting unit 70, keyword selecting unit 90 and user-specifying information setting unit 95 may be separated data input devices, or a sole data input device.

Output unit 120 is such a unit as a recording device for recording data in an electronic medium or a printer.

The forensic system 1 shown in FIG. 1 may execute a forensic program stored in an external storage device (not shown) on CPU 150 of the computer. The forensic program may be stored in a recording medium such as a CD-ROM, or distributed via a network such as Internet, and may be installed in the computer.

In the first embodiment described below of the present invention, the forensic system 1 is a personal computer. Forensic system 1 may be a server or a portable data assistance type of a computer device. Forensic system 1 may be a system configuration of a network type described in the second embodiment.

User-specifying information setting unit 95 sets user-specifying information showing which one of users contained in the user information each of the plurality of document files is related with, and records the set user-specifying information in recording unit 30. Since the user information recorded on the plurality of computers and the server cannot necessarily contain all users related with litigation, a new user can be manually set additionally according to an operator's instruction.

User-specifying information setting unit 95 sets, to each document file, a user who utilized the document file. For example, user-specifying information setting unit 95 may set, to the document file, user information showing that a plurality of users are related with the document file. User-specifying information setting unit 95 may set a single document file to be related with a single user, or it may set a single document file to be utilized by a plurality of users. User-specifying information setting unit 95 may be capable of setting the relationship of a document file with each of a plurality of users and ranking information showing a relative rank order of relationship of each of the plurality of users with litigation to the user-specifying information. Thereby, while a plurality of users are set to a single document file, the relative rank order of relationship of each user among the set users with litigation can be set. Further, user-specifying information setting unit 95 may select a relative rank order in the ranking information so that searching unit 100 searches a document file where user-specifying information corresponding to a user having the selected relative rank order was set.

Digital information acquiring unit 20 acquires digital information recorded in computers PC2 to PC5 or server 10 used by users.

For example, digital information acquiring unit 20 copies digital information recorded in computers PC2 to PC5 or server 10 to an electronic medium such as USB, CD or DVD. Unit 20 may further copies the digital information to the forensic system via the electronic medium.

Digital information acquiring unit 20 may preserve to collect recorded digital information in computers PC2 to PC5 or serer 10 via network in the case that forensic system 1 and computers PC2 to PC5 or server 10 connect to the network.

Digital information acquiring unit 20 acquires recorded second digital information including second digital document information and second user information in a second server different from server 10, so that forensic system 1 searches not only the digital document information but also a plurality of document files constituting the second digital document information.

Digital information acquiring unit 20 may collect recorded second digital information including second digital document information, second user information and second access history information in the second server different from server 10.

Forensic system 1 may further include text information extracting unit 80 to extract text information from each of a plurality of document files, keyword selecting unit 90 which selects a keyword, and searching unit 100 which searches a document file including the selected keyword based upon the extracted text information from the recorded digital document information.

Additional information setting unit 70 sets additional information to the document file searched by searching unit 100.

Forensic system 1 may further include data converting unit 110. The unit 110 converts and normalizes a document file of digital document information recorded by unit 30 to common format. The document file which has been converted by data converting unit 110 is processed without further converting until being outputted from output unit 120.

Forensic system 1 may further include statistical data producing unit 130. Unit 130 produces statistical data represented from data size for each data format of the acquired digital document information, or statistical data represented from data size for each data format of the digital document information searched by searching unit 100.

Forensic system 1 may include clock unit 140 to determine time and date when digital information is acquired. The digital information may include folder information to specify where the digital document information is stored. Digital information acquiring unit 20 acquires digital document information and folder information which were produced after a time and date clocked by clock unit 140 previously. Unit 20 acquires user information related with the acquired digital document information and folder information.

The digital information may include the digital document information, the user information, and the folder information.

Clock unit 140 calculates a date and time of the digital information which has been acquired by digital information acquiring unit 20.

Display unit 40 displays content according to an instruction of display control unit 45 included in control unit 160.

Digital information acquiring unit 20 may selectively acquire, from computers PC2 to PC5 or server 10, digital document information and folder information produced in a period from the (n-1)^{th} to n^{th} (n=2, 3, ..) acquiring point. At this time, digital information acquiring unit 20 acquires the digital document information and folder information to further acquire user information related with the acquired digital document information. Server 10 may be at least one server. For example, it may be composed of a plurality of servers. Moreover, it may be at least two of a mail server, a file server, and a document managing server.

Forensic system 1 may be used simultaneously by operators.

Additional information setting unit 70 may include a plurality of data input devices, and a plurality of display units 40 corresponding to the plurality of additional information setting units 70.

A plurality of operators may set additional information through the plurality of additional information setting units 70 while evaluating digital document information simultaneously.

Output unit 120 is to output digital document information. For example, output unit 120 may be a printer or a recording device which records digital information on an electronic medium.

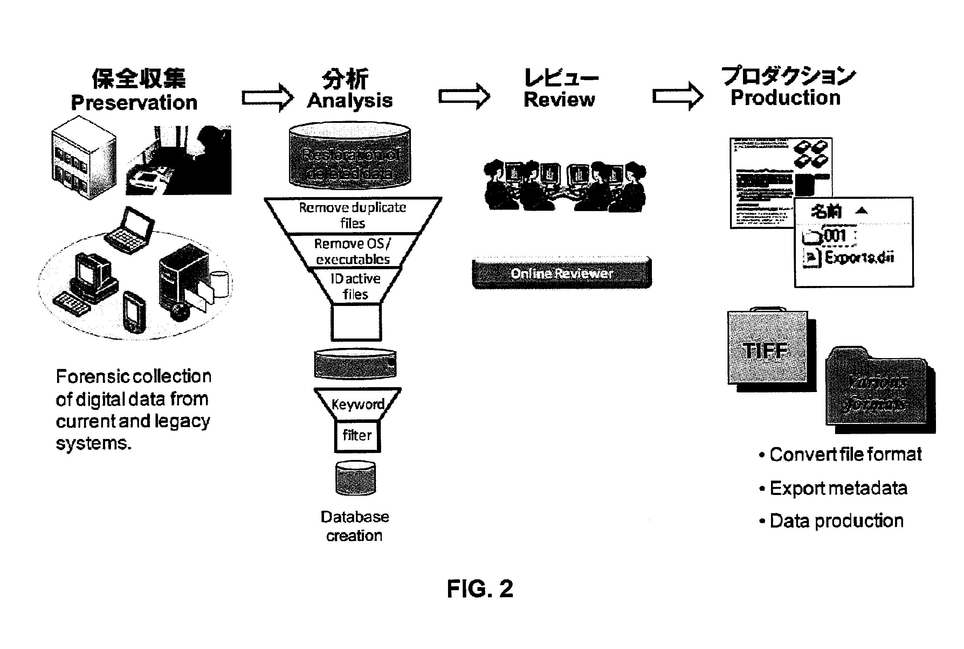

FIG. 2 illustrates a service flow to explain a procedure for performing a preparation work for submission of evidential materials to a law court in forensic system 1.

When a crime or a legal conflict regarding a computer such as unauthorized access or leakage of confidential information which is called "forensic" occurs, it is necessary to collect and analyze devices, data, and/or electronic records which are required for investigation of the causes or investigation to clarify legal evidentiality thereof.

Particularly, in a civil litigation in United State of America, since such a procedure as eDiscovery is required, both a plaintiff and a defendant of litigation must submit all of related digital information as evidences. They must submit digital information recorded in a computer(s) or a server(s) as evidences.

Forensic system 1 performs to preserve the digital information recorded in computers PC2 to PC5 and server 10 in order to evaluate digital information related with litigation thereby conducting a preparation work to submit evidential materials to the law court.

Thereafter, forensic system 1 registers the preserved digital information in a database such as recording unit 30 and analyzes the digital information to classify the same based upon the keyword search or filtering.

Recording unit 30 may be included in one of computers in forensic system 1, or may be stored in the server different from the computer.

Forensic system 1 provides the classified digital information on display unit 40 and operators may review the data and set additional information to the digital document information via additional information setting unit 70.

Control unit 160 has functions for preservation and analysis, a processing analysis and search function, operator' s reviewing, and producing.

For example, preservation and analysis Function of the control unit 160 may have a case management function (a function of managing unit 85) which allows data management for each case, a file analysis function (a function of searching function 100) which allows analysis of the kind of file and/or a possession amount thereof for each target individual/evidential material and allows analysis of a file to be searched, a file kind selection and extraction function (a function of digital document information extracting unit 60) which allows selection of file type to be searched/browsed, and a preservation function (a function of data converting unit 110) which allows preservation of the selected file as a separate file. Further, the processing analysis and search function of control unit 160 may have a full-text search function and a frequently-appearing word and phase top-extraction function (functions of searching unit 100). The full-text search function is compatible with multi-language, allows AND, OR, and NOT searches by Boolean operation, a grouping search, and has a highlight display function of a searched word or phrase, a conversion function to Meta Data. Further, the full-text search function may have an advanced search function such as neighborhood search. The frequently-appearing word and phase top-extraction function is for extracting a frequently-appearing word or phrase within certain digital document information.

Review function of the control unit 160 has, for example, an E-mail Family browsing processing function (a function of searching unit 100) which allows collective browsing of E-mail Family, a free-design Tag function (a function of searching unit 100) which allows search for a material provided with one evaluation or a plurality of evaluations as additional information based upon the evaluation or the evaluations, a free-design BookMark function (a function of searching unit 100) which allows BookMark search for a material set with hierarchy structure BookMark, a free-input comment column (a function of managing unit 85) including a comment column in which any number of characters can be inputted, a simultaneous browsing function for the above-described plurality of operators to evaluate digital document information, an access right control function (a function of managing unit 85) which allows setting of such right as access right, manager right, or browsing-only right for each case, for each account of a browser when performing Review, a writing-within-document Memo function (a function of managing unit 85) which allows writing within a document without changing a text of digital document information, a case Management function (a function of managing unit 85) which allows display of the number of Review-completed documents (%), an E-mail Threading function (a function of managing unit 85) which displays E-mail threads (such as returning or forwarding) collectively, a mail analysis display function (a function of statistical data producing unit 130) which displays transmissions and receptions of mails graphically, a similar document display function (a function of managing unit 85) which performs automatic classification of similar documents such as Draft or old Version to display them, a similar document difference highlight function (a function of managing unit 85) which highlight-displays only a portion of a difference between similar documents, and a previous and next texts-search Hit portion display function (a function of searching unit 100) which displays only the surrounding area of a word or a phase hit by searching.

The Production function of control unit 160 has various output functions (a function where output can be performed by output unit 120 according to an instruction from managing unit 85) of XML output of such information as actual file, meta information or Tag information, CSV output, various load file outputs, and a Batch Printing function (a function where output can be performed by output unit 120 according to an instruction from managing unit 85) which prints the selected plurality of digital document information.

Forensic system 1 performs Production to produce acquired data in an electronic medium by output unit 120. For example, forensic system 1 records data in an electronic medium with a common data format by a recording device by a recording device.

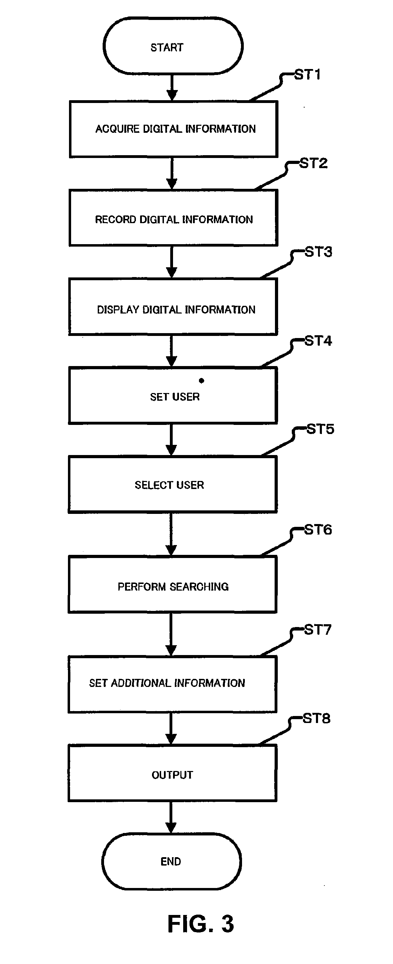

A procedure for performing a preparation work for submission of evidential materials to the law court in forensic system 1 will be described in detail with reference to a flowchart shown in FIG. 3.

Digital information acquiring unit 20 acquires digital information including digital document information in common format such as Word format, PDF format, PPT format, or Excel format, and user information about users who used computers PC2 to PC5 or server 10 (ST1).

Explanation is made assuming that the number of the computers PC2 to PC5 which users utilized is for example, four, but the number of PCs is not limited to four, and it may be any plural number.

Digital information acquiring unit 20 records the acquired digital information to recording unit 30 (ST2). Display unit 40 can display the digital information (at least either of, for example, the digital document information, the user information, and information showing only title of the digital information) via control unit 160 (ST3).

For example, according to an instruction from display control unit 45, display unit 40 may display all of the user information, and the digital document information, it may display at least one thereof, or it may display at least one of attribute information (for example, a name of a user or a file name of a document file) of these information.

For example, while confirming screen of display unit 40, operators conduct login to forensic system 1 and further produces Case (a unit of the uppermost data group in the database in forensic system 1). Further, while confirming screen of display unit 40, the operators perform setting of connection destination of a server corresponding to recording unit 30 in which the digital information has been recorded and management thereof (in this case, a plurality of the recording units 30 are present). Further, while confirming screen of display unit 40, the operators perform setting of Custodian (a data-holding target individual or a user) and management thereof. While confirming screen of display unit 40, the operators perform production of Target (a middle data group unit in the database of the forensic system 1) digital document information information-collected and preserved, and status control thereof. Though described later, while confirming screen of display unit 40, the operators make connection of Custodian to Target information-collected and preserved. For example, while confirming screen of display unit 40, the operators preset which Custodian was related with litigation to a plurality of Targets composed of the digital document information acquired from computers PC2 to PC5 or server 10. Control unit 160 can acquire the digital information recorded in recording unit 30 to analyze the digital information by the various functional units.

Forensic system 1 is provided with statistical data producing unit 110 which produces statistical data represented from data size for each data format of the digital document information recorded in recording unit 30, or statistical data represented from data size for each data format of the digital document information searched by searching unit 100.

For example, while confirming screen of display unit 40, the operators can select Custodian to be analyzed and a predetermined Path (directory) from Target corresponding to the Custodian to display a list of an analysis result of the number of files and a size for each Custodian. Further, while confirming screen of display unit 40, the operators can display the list of the analysis result of the number of files and a size for each Path (directory) as a chart. Further, while confirming screen of display unit 40, the operators can display the analysis result of the number of files and a size for each Path (directory) as a list. Further, while confirming screen of display unit 40, the operator can display the list of the analysis result of the number of files and a size for each File Type as a chart. Further, while confirming screen of display unit 40, the operators can display the list of the analysis result of the number of files and a size for each File Type.

Moreover, while confirming screen of display unit 40, the operators can display the list of the analysis result of the number of files and a size for each File Type as a chart. Further, while confirming screen of display unit 40, the operators can display the list of the analysis result of the number of files and a size for each File Type of only a text-searchable file as a chart. The text-searchable file is a file where text information can be preliminarily extracted from the digital document information recorded in recording unit 30 by text information acquiring unit 80.

Next, the operators operates user-specifying information setting unit 95 via display unit 40 to set for each of the document files user-specifying information showing which one (Custodian) of the users contained in the user information the document file is related with, and then set recording unit 30 to record the set user-specifying information (ST4). Specifically, while confirming screen of display unit 40, the operators make connection of each document file constituting Target information-collected and preserved to a user related with litigation of the users (which may be computer IDs of the users, and which may be any information described above) contained in the user information. Specifically, while confirming screen of display unit 40, the operators set each document file to be provided with a proper user ID of user IDs (or user names) selected from the user information. Since the user information recorded on the plurality of computers or the server can not necessarily contain all users related with litigation, the operators can also additionally set a new user manually.

Further, the operators can operate user-specifying information setting unit 95 to set, to the document file, the user-specifying information showing that a plurality of users are related with the document file. The operators may perform setting such that a single document file is related with a single user, or they may perform setting such that a single document file is utilized by a plurality of users. The operators may also be capable of operating user-specifying information setting unit 95 to set the relationship of the document file with a plurality of users and ranking information showing a relative rank order of relationship of each of the plurality of users with litigation to the user information. Thereby, while performing setting such that a single document file is related with a plurality of users, the operators can set the rank order showing a relative degree of relationship with litigation of each user among the plurality of users. Further, the operators selects a relative rank order of the ranking information by user-specifying information setting unit 95 so that searching unit 100 searches a document file where user-specifying information corresponding to a user having the selected relative rank order was set.

While confirming screen of display unit 40, the operators select at least one user (Custodian) by user selecting unit 50 (ST5). For example, ID information or name information of Mr. Koh (personal name) when he/she uses the computers or the server is preliminarily recorded as the user-specifying information in recording unit 30 so that the operators can select his/her ID or Mr. Koh, or another individual on display unit 40.

The operators can select a specific user on a selection screen of display unit 40 to search a document file.

Searching unit 100 searches a document file where user-specifying information corresponding to the selected user was set (ST6).

For example, when the operators select Mr. Koh who is Custodian by user selecting unit 50, since relationships between document files and users (Custodian) are set by user-specifying information setting unit 95, the operators can also extract only a document file related with the selected user from the document files in Target.

The example of Mr. Koh has been described, but when a plurality of Custodians such as Mr. Otsu (personal name) in addition to Mr. Koh are selected, only a document file related with Mr. Koh and Mr. Otsu can be extracted. Also, as described above, the operators can perform AND, OR, or NOT search of Mr. Koh and Mr. Otsu. The operators can also select a relative rank order of the ranking information, in addition to at least one user, by user selecting unit 50. This causes searching unit 100 to search a document file where user-specifying information corresponding to the user having the selected relative rank order was set.

In the case where the ranking information showing a relative rank order of relationship of each of a plurality of users with litigation is set in the user-specifying information, for example, the operators use user-specifying information setting unit 95 to set Mr. Koh who has the highest relationship with litigation at "First", and set Mr. Otsu who has the second highest relationship at "Second" in a certain document file.

Then, when searching, the operators can search a document file where Custodian is Mr. Otsu and the relative rank order of Mr. Otsu is "Second".

Further, the function of searching unit 100 allows the operators to perform a search other than narrowing-down by user, while confirming screen of display unit 40. The function of display control unit 45 allows the operators to perform simple browsing, while confirming screen of display unit 40. The simple browsing allows the operators to grasp the contents of the digital document information.

The operators set additional information to the extracted document files in the digital document information to indicate whether or not each of the document files is related with litigation (ST7).

Specifically, the operators may add a tag for each document file depending on its relationship with litigation. The tag (additional information) may include "Hot" for a file related with litigation, "Responsive" for one which may be related with litigation potentially, "Not Responsive" for one which is not related with litigation. More specifically, the operators may input of a tag by clicking a file row in Batch list.

The operators operate output unit 120 to output the document file related with litigation based upon the additional information. CPU 150 which has received the operator's operation controls output unit 120 so as to perform outputting. For example, the operators may output only a document file attached with Hot, or may output document files attached with Hot and Responsive.

Output unit 120 outputs a document file related with litigation based on the additional information based on the instruction from CPU 150 (ST8).

Forensic system 1 may include a configuration by a plurality of servers. Forensic system 1 may include digital information extracting unit and searching unit. Digital information extracting unit and searching unit may be separated into the servers for a forensic system. Separated forensic systems may be connected via a network.

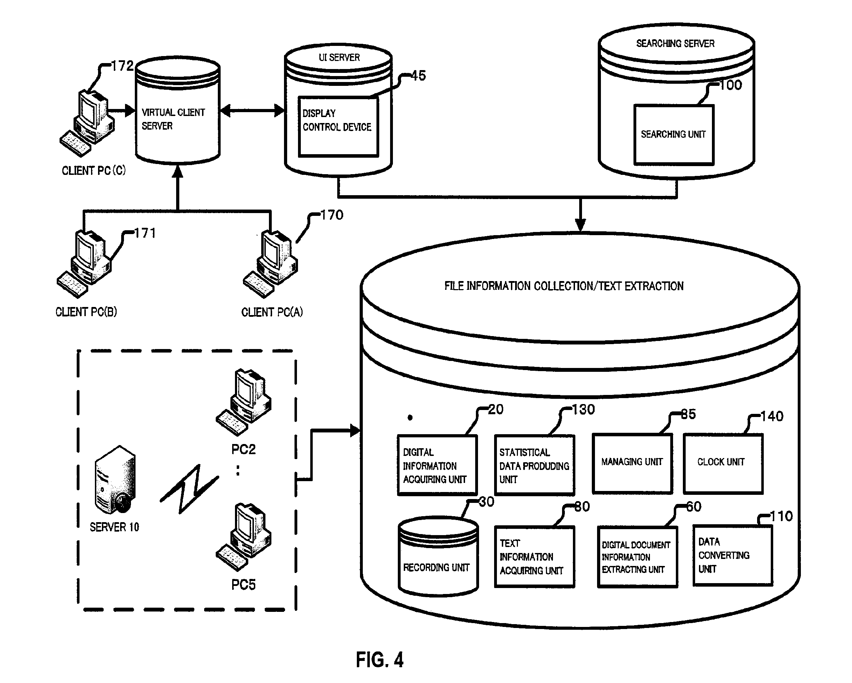

A second embodiment will be described with reference to FIG. 4.

Forensic system 1 may have a system configuration of a network type as shown in FIG. 4. The second embodiment of the present invention of forensic systems 1 has processing units similar to those of forensic system 1 explained in the first embodiment of the present invention. Processing units are located separately in a plurality of servers. The servers are connected to each other via a network. Therefore, the servers may be located within the country, and the servers may be located in a distributing manner regardless of home and abroad.

According to forensic system 1, user selecting unit 50, additional information setting unit 70, keyword setting unit 90, and user-specifying information setting unit 95 correspond to a data input device provided in each of clients PC170 to 172.

Display unit 40 corresponds to each of client computers PC170 to 172. Display response of Display unit 40 can be improved by collecting data transmissions and receptions in a virtual client server in a bundle between a plurality of clients PCs and a UI server.

Thus, forensic system 1 may be configured by the computer like the first embodiment of the present invention or forensic system 1 may be configured by the system of the network type like the second embodiment of the present invention.

According to forensic system 1, by setting for each of a plurality of document files, user-specifying information showing which one of users contained in the user information the document file is related with, setting recording unit 30 to record the set user-specifying information, selecting at least one user, searching a document file where user-specifying information corresponding to the selected user was set, setting additional information showing whether or not the searched document file is related with litigation via display unit 40, and outputting a document file related with litigation based upon the additional information, forensic system 1 can extract, analyze, and evaluate only digital document information classified according to each user related with litigation, without validating all the acquired digital document information.

Forensic system 1 can extract only digital document information related with a specific individual from a flood of digital document information to achieve reduction of working load for evidential material preparation for litigation.

According to the forensic system, the forensic method, and the forensic program of the present invention, by setting user-specifying information showing that a document file is related with each of a plurality of user, forensic system can perform setting such that a single document is related with a plurality of users.

According to forensic system 1, when the relationship of the document file with each of a plurality of users and the ranking information showing a relative rank order of relationship of each of the plurality of users with litigation are set to the user-specifying information, the operators can preliminarily set that a plurality of users are related with a document file and the rank order showing a relative degree of relationship with litigation of each user among the plurality of users.

According to the forensic system 1, when searching unit 100 searches a document file where user-specifying information corresponding to a user having the selected rank was set, the operators can search digital document information with which a user related with litigation is related based on the rank order showing the relative degree of relationship.

According to forensic system 1, when second digital information containing second digital document information and second user information which have been recorded on a second server different from server 10 is acquired, and when not only the digital document information but also a plurality of document files constituting the second digital document information is searched, the operators can analyze and validate all the digital document information recorded on a plurality of servers.

According to forensic system 1, text information extracting unit 80, keyword selecting unit 90, and searching unit 100 are provided, and when additional information setting unit 70 sets additional information to the searched document file, the operator can narrow down only one of the digital document information recorded in the server which was accessed by the specific individual, and a population of the digital document information which is potentially related with litigation by a predetermining search.

According to forensic system 1, when the document file converted by data converting unit 110 is processed with the same data format as the converted data format in a period before it is outputted by output unit 120, the operators can reduce a wasteful step such as data format conversion in the course of the processing flow and they can exclude a risk of quality degradation of the digital document information.

According to forensic system 1, when statistical data producing unit 130 is further provided, statistical data can be visualized and provided to the operators, so that labor required for litigation preparation can be grasped early.

According to forensic system 1, further, when digital information acquiring unit 20 acquires the digital document information and folder information which were produced after the date and time previously clocked by clock unit 140, the operators can perform difference collection of the digital information, which can reduce load for acquiring the same digital information from such a device as the server redundantly each time. According to forensic system 1, when a plurality of additional information setting units are provided, additional information setting units 70 can set additional information by different operators, so that the operators can perform a preparation work at an early stage by a plurality of operators making determination about whether or not digital document information is each an evidential material to a law court.

The embodiments of the present invention have been described above, but the technical scope of the present invention is not limited to the scope described in the above-described embodiments. It is apparent that various modifications or improvements can be applied to the above-described embodiments. It is apparent from the description of the scope of claims that an aspect which has been applied with such a modification or improvement can also be included in the technical scope of the present invention.

Further, forensic systems 1 of the first embodiment and the second embodiment may be configured by combining the respective whole systems or respective processing units of the respective forensic systems 1.

## Claims

1. A forensic system which acquires digital information recorded on a plurality of computers or a server to analyze the acquired digital information, comprising:
a digital information acquiring unit which acquires digital information containing digital document information composed of a plurality of document files, and user information about users using the plurality of computers or the server;
a recording unit which records therein digital information acquired by the digital information acquiring unit;
a display unit which displays the recorded digital information;
a user-specifying information setting unit which sets user-specifying information showing which one of users contained in the user information each of the plurality of document files is related with, and which sets the recording unit to record the set user-specifying information, via the display unit;
a user selecting unit which selects at least one user via the display unit;
a searching unit which searches a document file where user-specifying information corresponding to the selected user was set;
an additional information setting unit which sets additional information showing whether or not the searched document file is related with litigation; and
an output unit which outputs a document file which is related with litigation, based on the additional information.

2. The forensic system according to claim 1, wherein the user-specifying information setting unit sets, to the document file, user-specifying information showing that a plurality of users are related with the document file.

3. The forensic system according to claim 2 wherein the user-specifying information setting unit sets that the plurality of users are related with the document file, and ranking information showing a relative degree of relationship of each of the plurality of users with litigation, to the user-specifying information.

4. The forensic system according to claim 3, wherein
the user selecting unit further selects a rank order of the ranking information;
and
the searching unit searches a document file where user-specifying information corresponding to a user having the selected rank order was set.

5. The forensic system according to any one of claims 1 to 4, wherein
the digital information acquiring unit is a unit to acquire second digital information containing second digital document information and second user information, the second digital information being recorded in a second server different from the server; and
the forensic system searches not only the digital document information but also a plurality of document files constituting the second digital document information.

6. The forensic system according to any one of claims 1 to 5, further comprising:
a text information extracting unit which extracts text information for each of the plurality of document files from the recorded digital document information; and
a keyword selecting unit which selects a keyword, wherein
the searching unit searches a document file including the selected keyword, based on the extracted text information; and
the additional information setting unit sets additional information to the searched document file.

7. The forensic system according to any one of claims 1 to 6, further comprising:
a data converting unit which converts a document file in the digital document information recorded by the recording unit to a predetermined data format, wherein
a document file converted by the data converting unit is processed with the same data format as the converted data format in a period before being outputted by the output unit.

8. The forensic system according to any one of claims 1 to 7, further comprising:
a statistical data producing unit which produces statistical data represented from data size for each data format of the acquired digital document information or statistical data represented from data size for each data format of the searched digital document information.

9. The forensic system according to any one of claims 1 to 8, further comprising:
a clock unit which, when newly acquiring digital information, clocks a date and time of the acquirement, the digital information further including folder information saving digital document information, wherein
the digital information acquiring unit acquires digital document information and folder information which were produced after the time and date clocked by the clock unit previously and acquires user information related with the acquired digital document information.

10. The forensic system according to any one of claims 1 to 9, wherein
the forensic system can be utilized by a plurality of operators simultaneously,
and
the additional information setting unit can set additional information by different operators.

11. The forensic system according to any one of claims 1 to 10, wherein
the output unit is either one of a printer and a digital document producing device.

12. A forensic method which acquires digital information recorded on a plurality of computers or a server to analyze the acquired digital information, comprising:
a step of acquiring digital information containing digital document information composed of a plurality of document files, and user information about user utilizing the plurality of computers or the server;
a step of recording digital information acquired by the digital information acquiring unit;
a step of displaying the recorded digital information;
a step of setting user-specifying information showing which one of users contained in the user information each of the plurality of document files is related with, and setting the recording unit to record the set user-specifying information;
a step of selecting at least one user;
a step of searching a document file where user-specifying information corresponding to the selected user was set;
a step of setting additional information showing whether or not the searched document file is related with litigation; and
a step of outputting a document file related with litigation based upon the additional information.

13. A forensic program which acquires digital information recorded on a plurality of computers or a server to analyze the acquired digital information, the forensic program causing a computer to execute:
a function of acquiring digital information containing digital document information composed of a plurality of document files, and user information about user utilizing the plurality of computers or the server;
a function of recording digital information acquired by the digital information acquiring unit;
a function of displaying the recorded digital information;
a function of setting user-specifying information showing which one of users contained in the user information each of the plurality of document files is related with, and setting the recording unit to record the set user-specifying information;
a function of selecting at least one user;
a function of searching a document file where user-specifying information corresponding to the selected user was set;
a function of setting additional information showing whether or not the searched document file is related with litigation; and
a function of outputting a document file related with litigation based upon the additional information.
